(19) **Europäisches Patentamt**
**European Patent Office**
**Office européen des brevets**

(11) **EP 3 928 426 B1**

(12) **FASCICULE DE BREVET EUROPEEN**

(45) Date de publication et mention
de la délivrance du brevet:
**17.01.2024 Bulletin 2024/03**

(21) Numéro de dépôt: **20702845.7**

(22) Date de dépôt: **10.02.2020**

(51) Classification Internationale des Brevets (IPC):
**H02P 29/66** *(2016.01)* **H02P 21/20** *(2016.01)*

(52) Classification Coopérative des Brevets (CPC):
**H02P 29/662; H02P 21/20**

(86) Numéro de dépôt international:
**PCT/EP2020/053272**

(87) Numéro de publication internationale:
**WO 2020/169379 (27.08.2020 Gazette 2020/35)**

(54) **PROCÉDÉ D'ESTIMATION DU COUPLE D'UNE MACHINE ÉLECTRIQUE SYNCHRONE**

VERFAHREN ZUR SCHÄTZUNG DES DREHMOMENTS EINER ELEKTRISCHEN
SYNCHRONMASCHINE

METHOD FOR ESTIMATING THE TORQUE OF A SYNCHRONOUS ELECTRIC MACHINE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.02.2019 FR 1901751**

(43) Date de publication de la demande:
**29.12.2021 Bulletin 2021/52**

(73) Titulaires:
• **Renault s.a.s**
**92100 Boulogne Billancourt (FR)**
• **NISSAN MOTOR Co., Ltd.**
**Yokohama-shi, Kanagawa 221-0023 (JP)**

(72) Inventeur: **BALAFAS ROHART, Electre**
**78310 MAUREPAS (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**EP-A1- 2 827 493 WO-A1-2016/166443
DE-A1-102015 207 185 FR-A1- 3 054 391
GB-A- 2 390 766 US-A1- 2011 144 843
US-A1- 2012 212 169**

EP 3 928 426 B1

**Description**

La présente invention se rapporte de manière générale au domaine de l'électrotechnique et plus précisément au pilotage d'un moteur électrique, trouvant notamment une application avantageuse dans le domaine automobile.

La commande d'un moteur électrique utilise classiquement une boucle de régulation, dans laquelle étant donné un couple de consigne, on en déduit des courants de consigne et des tensions de commande pour l'onduleur alimentant le moteur électrique. Dans certains procédés de régulation, on corrige l'erreur entre le couple réalisé par le moteur électrique et le couple de consigne.

De plus la connaissance du couple réalisé est également nécessaire pour surveiller le bon fonctionnement du moteur électrique, notamment pour interdire par exemple l'utilisation de celui-ci lorsque le couple réalisé ne suit pas le couple de consigne du fait d'un défaut logiciel et risque d'engendrer des accélérations ou freinages intempestifs dangereux en conduite, et de mettre en cause les lois de gestion énergétique pour les véhicules hybrides.

Dans de tels procédés de régulation du couple ou de surveillance du couple, le couple réalisé est soit mesuré soit estimé. La mesure du couple réalisé nécessite un capteur coûteux, une estimation du couple réalisé est donc préférable. Une telle estimation utilise généralement des mesures des courants de phase du moteur électrique, ainsi que des valeurs représentatives du flux magnétique généré par les bobinages du moteur électrique.

Or le flux magnétique généré par le moteur électrique, qui peut être déduit des mesures de courants de phase, ne varie linéairement avec ceux-ci que pour de faibles valeurs d'intensité, et est donc difficile à estimer, notamment dans un moteur électrique qui produit un fort couplage magnétique. Par exemple la construction de cartographies embarquées de composantes du flux magnétique calculées à partir d'un modèle quasi statique non linéaire permet une estimation du couple, mais celle-ci présente une erreur d'estimation importante avec le couple réellement mesuré sur banc. D'autres méthodes permettent d'estimer les composantes du flux magnétique en utilisant les mesures des tensions statoriques, mais l'erreur d'estimation reste importante du fait des non-linéarités de l'onduleur alimentant la machine, qui rendent ces mesures de tension très imparfaites.

Il est également possible, afin de rester dans un domaine linéaire de variation du flux en fonction des mesures des courants de phase, de surdimensionner le moteur électrique par rapport au besoin de couple. Néanmoins cette solution n'est pas souhaitable dans le domaine automobile où on cherche le moins d'encombrement possible du groupe motopropulseur électrique.

Le brevet FR3054391 propose une estimation du couple d'un moteur électrique utilisant un unique réseau de neurones en entrée duquel on applique un vecteur d'intensité comportant les mesures des courants statoriques et rotorique. Du fait de la relation non linéaire qui existe entre le couple d'une part et les courants d'alimentation ainsi que les composantes du flux magnétique d'autre part, l'apprentissage des paramètres du réseau de neurones ne donne pas de bons résultats, et l'erreur d'estimation du couple en sortie est conséquente.

Les documents US 2012/212169, US 2011/144843, GB 2 390 766 et DE 10 2015 207185 décrivent différentes méthodes utilisées pour estimer l'évolution du flux et du couple suivant la température.

Un des buts de l'invention est de remédier à au moins une partie des inconvénients de la technique antérieure en fournissant un procédé et un estimateur du couple d'une machine électrique synchrone, qui soit précis tout en ne nécessitant pas d'embarquer beaucoup de ressources en mémoire et en calcul, ni d'effectuer en amont un réglage complexe et long tel que celui d'un réseau de neurones.

A cette fin, l'invention propose un procédé d'estimation du couple d'une machine électrique synchrone comportant :

- une étape de réception de mesures des courants statoriques alimentant ladite machine, et d'une valeur mesurée de la température de ladite machine électrique,
- une étape de détermination d'une composante directe desdits courants statoriques, d'une composante en quadrature desdits courants statoriques alimentant ladite machine, et d'une valeur de flux rotorique correspondant à ladite valeur mesurée de température, ladite valeur mesurée de température étant comprise entre une première température prédéfinie et une deuxième température prédéfinie,
- une étape d'obtention d'une première valeur de flux global équivalent correspondant à une valeur de flux rotorique à ladite première température de ladite machine électrique, dans une première cartographie donnant ladite première valeur de flux global équivalent en fonction de ladite composante directe desdits courants statoriques et de ladite composante en quadrature desdits courants statoriques,
- une étape d'obtention d'une deuxième valeur de flux global équivalent correspondant à une valeur de flux rotorique à ladite deuxième température de ladite machine électrique, dans une deuxième cartographie donnant ladite deuxième valeur de flux global équivalent en fonction de ladite composante directe desdites courants statoriques et de ladite composante en quadrature desdits courants statoriques,
- une étape d'interpolation utilisant ladite première valeur de flux global équivalent et ladite deuxième valeur de flux global équivalent, et fournissant une estimation du flux global équivalent correspondant à ladite valeur de flux rotorique à ladite valeur mesurée de température,
- une étape d'estimation du couple de ladite machine en utilisant la formule suivante :

[Math 1]

$$Tq = \frac{3p}{2} * phiD(\varphi_f(T_{rot})) * Iq$$

où :

- Tq est le couple de ladite machine électrique,
- p est le nombre de paires de pôles de ladite machine électrique,
- Iq est ladite composante en quadrature desdits courants statoriques,
- $\phi_f(T_{rot})$ est ladite valeur de flux rotorique à ladite valeur mesurée de température Trot de ladite machine électrique,
- et phiD($\phi_f(T_{rot})$) est ladite estimation du flux global équivalent issue de ladite étape d'interpolation.

Grâce à l'invention, l'estimation du couple nécessite des cartographies pour seulement un flux global équivalent et non pas pour chaque composante directe et en quadrature du flux magnétique. De plus ces cartographies sont obtenues par la formule [Math 1] ce qui permet d'utiliser des mesures de couple effectuées sur un banc de test. Les résultats sont donc plus précis que dans l'art antérieur.
Avantageusement, le procédé d'estimation du couple selon l'invention comporte une étape préalable d'établissement d'au moins ladite première cartographie et ladite deuxième cartographie, ladite étape préalable comportant les sous-étapes suivantes :

- mesures de couple Tq de la machine électrique réalisées pour différents triplets (Id, Iq, $T_i$) correspondant à différents points de fonctionnement de ladite machine électrique, Id étant ladite composante directe desdits courants statoriques et $T_i$ la température du rotor,
- calcul pour chacun desdits triplets d'une composante de flux $\Phi_1$ indépendante de la température du rotor et définie par $\Phi_1 = (Ld - Lq)*Id$ , où Ld est la composante directe de l'inductance statorique et Lq est la composante en quadrature de l'inductance statorique, en utilisant l' expression

[Math 2]

$$\frac{Tq}{\frac{3p}{2} * I_q} - \varphi_{f(Ti)}$$

$\phi f(T_i)$ étant la valeur de flux rotorique correspondant à la température $T_i$ du rotor,
- construction de ladite première cartographie en additionnant, pour différentes valeurs Id de composantes directes de courants statoriques et Iq de composantes en quadrature de courants statoriques d'un desdits triplets, ladite composante de flux $\Phi_1$ précédemment calculée, et la valeur de flux rotorique à ladite première température,
- construction de ladite deuxième cartographie en additionnant, pour différentes valeurs Id de composantes directes de courants statoriques et Iq de composantes en quadrature de courants statoriques d'un desdits triplets, ladite composante de flux Φ1 précédemment calculée, et la valeur de flux rotorique à ladite première température.

Cette façon de construire les cartographies permet de s'affranchir d'une construction à partir de points de fonctionnement de la machine pour lesquels on a une température fixe égale à la première ou la deuxième température prédéterminée, ce qui est difficile à garantir. De plus il est difficile de faire des mesures à des températures extrêmes de machine, à cause de l'endommagement possible de la machine. Il est plus facile de calculer le flux rotorique pour une température prédéterminée.
Selon une autre caractéristique avantageuse de l'invention, ladite première température et ladite deuxième température correspondent à des températures limites de ladite machine électrique. Cela permet de n'embarquer dans un véhicule dont le groupe motopropulseur utilise le procédé selon l'invention, que deux cartographies du flux global équivalent, économisant ainsi des ressources mémoire.
L'invention concerne aussi un estimateur de couple d'une machine électrique synchrone à aimants permanents, mettant en oeuvre le procédé d'estimation du couple d'une machine électrique selon l'invention.

L'estimateur de couple selon l'invention présente des avantages analogues à ceux du procédé d'estimation du couple selon l'invention, et est par exemple utilisé dans un véhicule électrique ou hybride.

D'autres caractéristiques et avantages apparaîtront à la lecture d'un mode de réalisation préféré décrit en référence aux figures dans lesquelles :

- la figure 1 représente des étapes du procédé d'estimation du couple d'une machine électrique selon l'invention, dans ce mode de réalisation préféré,
- la figure 2 représente une étape préalable à l'utilisation du procédé selon l'invention, dans ce mode de réalisation préféré,
- et la figure 3 représente un estimateur de couple selon l'invention utilisant le procédé d'estimation de couple selon l'invention.

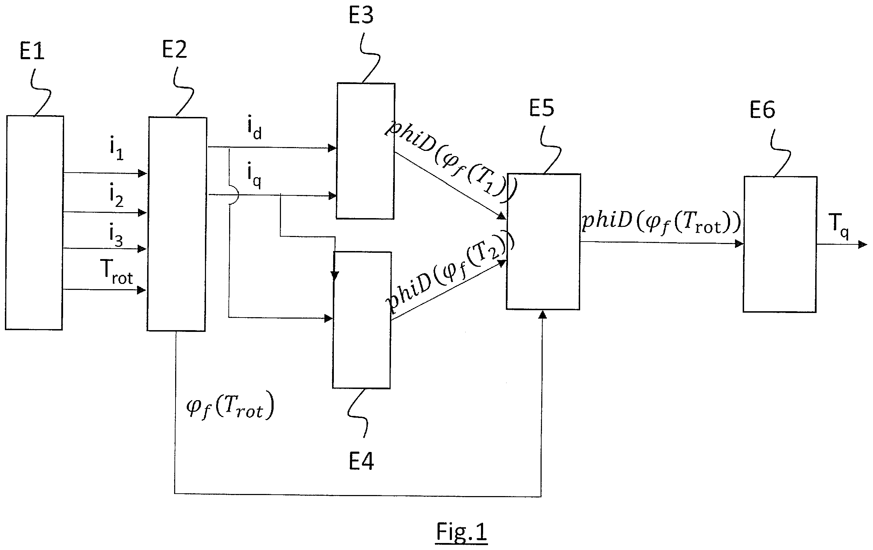

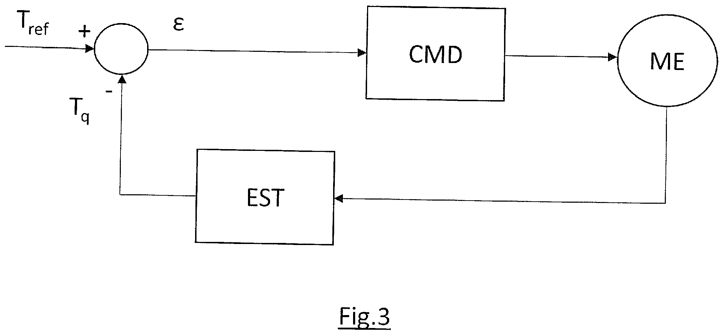

Selon un mode préféré de réalisation de l'invention représenté à la **figure 1**, le procédé d'estimation du couple selon l'invention comporte des étapes E1 à E6. Il est mis en oeuvre au moins en partie dans un calculateur muni de ressources mémoire, par exemple un calculateur embarqué dans un véhicule électrique ou hybride comportant une machine électrique ME, représentée sur la **figure 3.**

La machine électrique ME est, dans ce mode de réalisation préféré de l'invention, une machine synchrone à aimants permanents. Cependant le procédé selon l'invention est utilisable sur d'autres types de machines électriques, par exemple la machine synchrone à rotor bobiné où $\phi f(T_i)$ est remplacé par $M*I_f$ avec M l'inductance mutuelle et $I_f$ le courant d'excitation.

L'étape E1 est la réception de mesures des courants statoriques $i_1$, $i_2$, is alimentant la machine électrique ME, et de la mesure de la température $T_{rot}$ de la machine électrique ME. La température $T_{rot}$ est prise, dans ce mode de réalisation de l'invention, par un capteur de température au niveau du rotor de la machine électrique ME. En variante la température de la machine est mesurée au niveau du stator et la température du rotor utilisée par le procédé est estimée à partir d'un modèle thermique. Les mesures de courant sont prises par des capteurs de courant au niveau des phases de la machine électrique ME.

L'étape E2 est la détermination d'une composante directe Id et d'une composante en quadrature Iq des courants statoriques de la machine électrique ME, par une transformation des courants des phases $i_1$, $i_2$ et is mesurés depuis un repère fixe lié au stator, vers le repère de Park, en utilisant la transformée de Park bien connue de l'Homme du métier. En variante la transformée dq0 est également utilisable.

Dans cette étape E2, la valeur $\phi f(T_{rot})$ de la valeur de flux rotorique correspondant à la température $T_{rot}$ précédemment mesurée est également déterminée, en utilisant par exemple une cartographie donnant le flux rotorique en fonction de la température du rotor. En variante, la relation qui lie la température des aimants au rotor au flux rotor est définie par une droite affine $\phi f(T_i) = \phi f(20°C) + A*(T_i-20)$. On détermine la valeur de flux rotorique $\phi f(20°C)$ à 20°C (degré Celsius) et la constante A par différents essais à vide, en imposant différentes températures rotor connues. De préférence on utilise plusieurs droites affines pour plus de précision, par exemple une sur la plage [-20°C, 40°C] et une sur la plage [40°C, 150°C]. Ces plages peuvent bien sûr être modifiées, par exemple la première peut être étendue à [-20°C, 60°C].

L'étape E3 est l'obtention dans une première cartographie, d'une première valeur de flux global équivalent phiD($\phi_f(T_1)$) en fonction des composantes directe et en quadrature des courants statoriques déterminées à l'étape E2, cette première valeur de flux global phiD($\phi_f(T_1)$) étant valable pour une valeur de flux rotorique à une première température prédéfinie $T_1$. Plus précisément, sachant que le couple Tq de la machine électrique est donné par la formule :

[Math 3]

$$Tq = \frac{3p}{2}.(Ld \times Id \times Iq + Phif \times Iq - Lq \times Iq \times Id)$$

où :

Ld est la composante directe de l'inductance statorique de la machine électrique ME,
p est le nombre de paires de pôles de la machine.
Phif est le flux des aimants du rotor vu par le stator
et Lq est la composante en quadrature de l'inductance statorique de la machine électrique ME,

On peut donc formuler le couple Tq de la machine comme :

[Math 4]

$$Tq = \frac{3p}{2}.((Ld - Lq) \times Id + Phif).Iq = \frac{3p}{2}.(PhiD(\varphi(T_{rot}))).Iq$$

où phiD($\phi_f(T_{rot})$) est le flux global équivalent pour une valeur du flux rotorique correspondant à la température de la machine mesurée $T_{rot}$.

Dans cette troisième étape E3, le flux global équivalent phiD($\phi_f(T_1)$) déterminé ne correspond pas au flux global équivalent phiD($\phi_f(T_{rot})$) correspondant à la température machine mesurée $T_{rot}$, mais à celui qu'aurait la machine électrique ME si sa température était égale à la première température prédéfinie $T_1$, pour les mêmes valeurs de courants statoriques.

L'étape E4 est de façon similaire, l'obtention dans une deuxième cartographie, d'une deuxième valeur de flux global équivalent phiD($\phi_f(T_2)$) en fonction des composantes directe et en quadrature des courants statoriques déterminées à l'étape E2, cette deuxième valeur de flux global équivalent phiD($\phi_f(T_2)$) étant valable pour une valeur de flux rotorique à une deuxième température prédéfinie $T_2$, différente de la première température prédéfinie $T_1$. De préférence $T_1$ et $T_2$ correspondent à des températures limites de la machine électrique ME, de sorte que la température mesurée $T_{rot}$ soit toujours comprise entre les températures prédéfinies $T_1$ et $T_2$.

L'étape E5 est une interpolation linéaire utilisant les deux valeurs de flux global équivalent phiD($\phi_f(T_1)$) et phiD($\phi_f(T_2)$) obtenues aux étapes E3 et E4, pour estimer une valeur de flux global équivalent phiD($\phi_f(T_{rot})$) valable pour le flux rotorique à la température mesurée $T_{rot}$ de la machine électrique ME. L'étape E5 utilise par exemple, pour le calcul de phiD($\phi_f(T_{rot})$), la formule :

[Math 5]

$$phiD\left(\varphi_f(T_{rot})\right) = \frac{phiD\left(\varphi_f(T_1)\right) - phiD\left(\varphi_f(T_2)\right)}{\varphi_f(T_1) - \varphi_f(T_2)} * \left(\varphi_f(T_{rot}) - \varphi_f(T_2)\right) + phiD\left(\varphi_f(T_2)\right)$$

L'étape E6 est l'estimation du couple Tq de la machine électrique en utilisant la formule :

[Math 1]

$$Tq = \frac{3p}{2} * phiD(\varphi_f(T_{rot})) * Iq$$

où :

- p est le nombre de paires de pôles de ladite machine électrique,
- Iq est la composante en quadrature desdits courants statoriques déterminée à l'étape E2,
- et phiD($\phi_f(T_{rot})$) est l'estimation du flux global équivalent issue de l'étape d'interpolation E5.

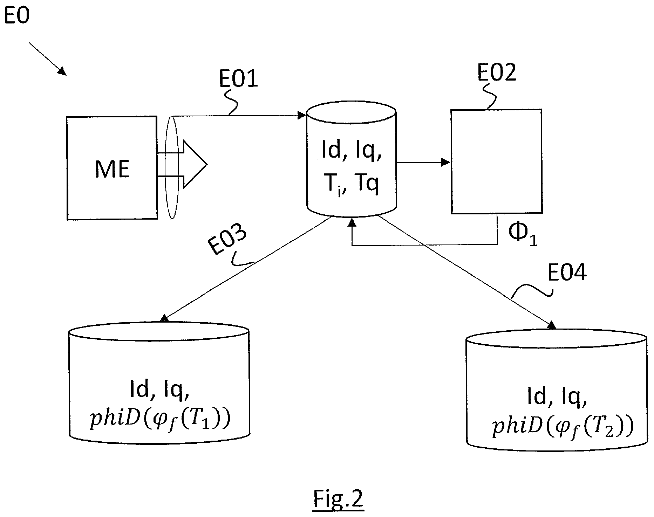

En référence à la **figure 2,** une étape E0 préalable à l'utilisation du procédé d'estimation de couple selon l'invention est représentée sous la forme d'étapes E01 à E04, permettant d'obtenir les première et deuxième cartographies donnant respectivement le flux global équivalent phiD($\phi_f(T_1)$) et le flux global équivalent phiD($\phi_f(T_2)$) en fonction des composantes directe et en quadrature des courants statoriques de la machine électrique ME.

L'étape E01 est la mesure des valeurs Tq de couple de la machine électrique ME à différents points de fonctionnement de la machine. Cette étape est réalisée sur un banc de tests de la machine électrique ME. Pour chaque point de fonctionnement testé, on mesure et on mémorise dans cette étape E01 le couple Tq réalisé par la machine électrique ME, les valeurs des courants des phases de la machine électrique, et la température $T_i$ du rotor. On associe ainsi pour différentes valeurs de couple Tq, différents triplets (Id, Iq, $T_i$) comportant la composante directe des courants statoriques correspondants, la composante en quadrature des courants statoriques correspondants, et la température $T_i$ de la machine correspondante.

L'étape suivante E02 est le calcul, dans un calculateur, pour chacun des triplets (avec le couple associé) mémorisés à l'étape E01, d'une composante de flux $\Phi_1$ indépendante de la température du rotor et définie par $\Phi_1$ = (Ld - Lq)*Id, où Ld est la composante directe de l'inductance statorique et Lq est la composante en quadrature de l'inductance statorique, en utilisant l' expression :

[Math 2]

$$\frac{Tq}{\frac{3p}{2} * I_q} - \varphi_{f(Ti)}$$

où

- Tq est le couple associé au triplet (Id,Iq,Ti) du point de fonctionnement considéré,
- p est le nombre de paires de pôles de la machine,
- et $\phi$f(T$_i$) est la valeur de flux rotorique correspondant à la température T$_i$ du rotor, obtenue par exemple dans une cartographie donnant le flux rotorique en fonction de la température de la machine.

L'étape E03 est la construction de la première cartographie en additionnant, pour chacun des points de fonctionnement considérés, la composante de flux $\Phi_1$ calculée à l'étape E02, avec la valeur de flux rotorique correspondant à la première température prédéfinie T$_1$, elle-même obtenue par exemple dans une cartographie donnant le flux rotorique en fonction de la température de la machine. En revenant à la formule [Math 4], on obtient bien des valeurs de flux global équivalent phiD($\phi_f$(T$_1$)). En associant chaque doublet de composante directe et de composante en quadrature des courants statoriques d'un point de fonctionnement à la valeur de flux global équivalent correspondante obtenue lors de cette étape E03, on obtient la première cartographie.

L'étape E04 est la construction de la deuxième cartographie de manière similaire, en additionnant, pour chacun des points de fonctionnement considérés, la composante de flux $\Phi_1$ calculée à l'étape E02, avec la valeur de flux rotorique correspondant à la deuxième température prédéfinie T$_2$, ce qui donne une valeur de flux global équivalent phiD($\phi_f$(T$_2$)). En associant chaque doublet de composante directe et de composante en quadrature des courants statoriques d'un point de fonctionnement à la valeur de flux global équivalent correspondante obtenue lors de cette étape E04, on obtient la deuxième cartographie.

Il est à noter qu'il est également possible d'obtenir directement des première et deuxième cartographies de flux global équivalent en utilisant les mesures issues de l'étape E01 respectivement à la première température prédéfinie T$_1$ et à la deuxième température prédéfinie T$_2$, en utilisant la formule [Math 1]. Néanmoins cela demande de stabiliser la température de la machine électrique ME respectivement aux températures T$_1$ et T$_2$ pour différents points de fonctionnement, ce qui est très difficile.

**La figure 3** illustre un estimateur de couple EST mettant en oeuvre le procédé d'estimation du couple de la machine électrique ME selon l'invention. L'estimateur EST reçoit en entrée des mesures des courants des phases de la machine électrique ME en étant relié à des capteurs de courant de la machine électrique ME, ainsi qu'une mesure de température en étant relié à un capteur de température du rotor. Il fournit en sortie une estimation Tq du couple de la machine électrique ME. Ce couple Tq est soustrait à une consigne de couple Tref, l'erreur ε résultant de cette opération étant envoyée en entrée d'un moyen de commande CMD de la machine électrique ME. Le moyen de commande CMD comporte typiquement un régulateur et un onduleur apte à appliquer des tensions de commande aux enroulements statoriques de la machine électrique ME.

Il est à noter que bien que dans ce mode de réalisation de l'invention, on utilise seulement deux températures prédéfinies pour réaliser l'interpolation du flux global équivalent à la température mesurée, en variante de réalisation on utilise plus de deux températures prédéfinies et on choisit celles qui sont les plus proches de la température mesurée pour faire l'interpolation du flux global équivalent à la température mesurée. Cette variante permet un résultat plus précis mais au prix de plus de ressources mémoire. De plus l'ordre des étapes n'est pas figé dans la réalisation de l'invention, les étapes E3 et E4 pouvant être effectuées en parallèle ou l'une après l'autre par exemple.

**Revendications**

1. Procédé d'estimation du couple (Tq) d'une machine électrique (ME) synchrone comportant :

 - une étape de réception (E1) de mesures des courants statoriques (i$_1$, i$_2$, i$_3$) alimentant ladite machine (ME) et d'une valeur mesurée (T$_{rot}$) de la température de ladite machine électrique (ME),
 - une étape de détermination (E2) d'une composante directe (Id) desdits courants statoriques, d'une composante en quadrature (Iq) desdits courants statoriques alimentant ladite machine (ME), et d'une valeur de flux rotorique $\phi f(T_{rot})$ correspondant à ladite valeur mesurée de température $(T_{rot})$, ladite valeur mesurée de température $(T_{rot})$ étant comprise entre une première température $(T_1)$ prédéfinie et une deuxième température $(T_2)$ prédéfinie,

- une étape d'obtention (E3) d'une première valeur de flux global équivalent $(phiD(\phi f(T_1)))$ correspondant à une valeur de flux rotorique à ladite première température $(T_1)$ de ladite machine électrique (ME), dans une première cartographie donnant ladite première valeur de flux global équivalent $(phiD(\phi f(T_1)))$ en fonction de ladite composante directe (Id) desdits courants statoriques et de ladite composante en quadrature (Iq) desdits courants statoriques,

- une étape d'obtention (E4) d'une deuxième valeur de flux global équivalent $(phiD(\phi f(T_2)))$ correspondant à une valeur de flux rotorique à ladite deuxième température $(T_2)$ de ladite machine électrique (ME), dans une deuxième cartographie donnant ladite deuxième valeur de flux global équivalent $(phiD(\phi f(T_2)))$ en fonction de ladite composante directe (Id) desdites courants statoriques et de ladite composante en quadrature (Iq) desdits courants statoriques,

- une étape d'interpolation (E5) utilisant ladite première valeur de flux global équivalent $(phiD(\phi f(T_1)))$ et ladite deuxième valeur de flux global équivalent $(phiD(\phi f(T_2)))$, et fournissant une estimation du flux global équivalent $(phiD(\phi f(T_{rot})))$ correspondant à ladite valeur de flux rotorique à ladite valeur mesurée de température $(T_{rot})$,

- une étape d'estimation (E6) du couple (Tq) de ladite machine (ME) en utilisant la formule suivante :

[Math 1]

$$Tq = \frac{3p}{2} * phiD(\varphi_f(T_{rot})) * Iq$$

où :

- Tq est le couple de ladite machine électrique (ME),
- p est le nombre de paires de pôles de ladite machine électrique (ME),
- Iq est ladite composante en quadrature desdits courants statoriques,
- $(\phi f(T_{rot}))$ est ladite valeur de flux rotorique à ladite valeur mesurée de température $T_{rot}$ de ladite machine électrique,
- et $phiD(\phi_f(T_{rot}))$ est ladite estimation du flux global équivalent issue de ladite étape d'interpolation (E5).

2. Procédé d'estimation du couple (Tq) d'une machine électrique (ME) synchrone selon la revendication 1, **caractérisé en ce qu'**il comporte une étape préalable (E0) d'établissement d'au moins ladite première cartographie et ladite deuxième cartographie, ladite étape préalable (E0) comportant les sous-étapes suivantes:

- mesures (E01) de couple Tq de la machine électrique (ME) réalisées pour différents triplets $(Id, Iq, T_i)$ correspondant à différents points de fonctionnement de ladite machine électrique (ME), Id étant ladite composante directe desdits courants statoriques et $T_i$ la température du rotor,

- calcul (E02) pour chacun desdits triplets d'une composante de flux $\Phi 1$ indépendante de la température du rotor et définie par $\Phi 1 = ( Ld - Lq )* Id$ , où Ld est la composante directe de l'inductance statorique et Lq est la composante en quadrature de l'inductance statorique, en utilisant l' expression

[Math 2]

$$\frac{Tq}{\frac{3p}{2} * I_q} - \varphi_{f(T_i)}$$

$\phi f(T_i)$ étant la valeur de flux rotorique correspondant à la température $T_i$ du rotor,

- construction (E03) de ladite première cartographie en additionnant, pour différentes valeurs Id de composantes directes de courants statoriques et Iq de composantes en quadrature de courants statoriques d'un desdits triplets, ladite composante de flux $\Phi 1$ précédemment calculée, et la valeur de flux rotorique à ladite première température $(T_1)$,

- construction (E04) de ladite deuxième cartographie en additionnant, pour différentes valeurs Id de composantes directes de courants statoriques et Iq de composantes en quadrature de courants statoriques d'un desdits triplets, ladite composante de flux Φ1 précédemment calculée, et la valeur de flux rotorique à ladite première température ($T_2$).

3. Procédé d'estimation du couple d'une machine électrique (ME) synchrone selon la revendication 1 ou 2, **caractérisé en ce que** ladite première température ($T_1$) et ladite deuxième température ($T_2$) correspondent à des températures limites de ladite machine électrique.

4. Estimateur de couple d'une machine électrique synchrone à aimants permanents, mettant en oeuvre le procédé d'estimation du couple d'une machine électrique selon l'une quelconque de revendications 1 à 3.

**Patentansprüche**

1. Verfahren zur Schätzung des Drehmoments (Tq) einer synchronen elektrischen Maschine (ME), umfassend:

- einen Schritt des Empfangens (E1) von Messungen der Statorströme ($i_1$, $i_2$, $i_3$), die die Maschine (ME) versorgen, und eines gemessenen Werts ($T_{rot}$) der Temperatur der elektrischen Maschine (ME),
- einen Schritt des Bestimmens (E2) einer direkten Komponente (Id) der Statorströme, einer Quadraturkomponente (Iq) der Statorströme, die die elektrische Maschine (ME) versorgen, und eines Rotorflusswerts $\phi f(T_{rot})$, der dem gemessenen Temperaturwert ($T_{rot}$) entspricht, wobei der gemessene Temperaturwert ($T_{rot}$) zwischen einer ersten vorgegebenen Temperatur ($T_1$) und einer zweiten vorgegebenen Temperatur ($T_2$) liegt,
- einen Schritt des Ermittelns (E3) eines ersten äquivalenten Gesamtflusswerts (phiD($\phi f(T_1)$)), der einem Rotorflusswert bei der ersten Temperatur ($T_1$) der elektrischen Maschine (ME) entspricht, in einem ersten Kennfeld, das den ersten äquivalenten Gesamtflusswert (phiD($\phi f(T_1)$)) in Abhängigkeit von der direkten Komponente (Id) der Statorströme und von der Quadraturkomponente (Iq) der Statorströme angibt,
- einen Schritt des Ermittelns (E4) eines zweiten äquivalenten Gesamtflusswerts (phiD($\phi f(T_2)$)), der einem Rotorflusswert bei der zweiten Temperatur ($T_2$) der elektrischen Maschine (ME) entspricht, in einem zweiten Kennfeld, das den zweiten äquivalenten Gesamtflusswert (phiD($\phi f(T_2)$)) in Abhängigkeit von der direkten Komponente (Id) der Statorströme und von der Quadraturkomponente (Iq) der Statorströme angibt,
- einen Interpolationsschritt (E5), der den ersten äquivalenten Gesamtflusswert (phiD($\phi f(T_1)$)) und den zweiten äquivalenten Gesamtflusswert (phiD($\phi f(T_2)$)) verwendet und eine Schätzung des äquivalenten Gesamtflusses (phiD($\phi f(T_{rot})$)) ausgibt, der dem Rotorflusswert bei dem gemessenen Temperaturwert ($T_{rot}$) entspricht,
- einen Schritt des Schätzens (E6) des Drehmoments (Tq) der Maschine (ME) unter Verwendung der folgenden Formel:

[Math 1]

$$Tq = \frac{3p}{2} * phiD\left(\varphi_f(T_{rot})\right) * Iq$$

worin:

- Tq das Drehmoment der elektrischen Maschine (ME) ist,
- p die Polpaarzahl der elektrischen Maschine (ME) ist,
- Iq die Quadraturkomponente der Statorströme ist,
- ($\phi f(T_{rot})$) der Rotorflusswert bei dem gemessenen Temperaturwert $T_{rot}$ der elektrischen Maschine ist,
- und phiD($\phi f(T_{rot})$) die aus dem Interpolationsschritt (E5) hervorgegangene Schätzung des äquivalenten Gesamtflusses ist.

2. Verfahren zur Schätzung des Drehmoments (Tq) einer synchronen elektrischen Maschine (ME) nach Anspruch 1, **dadurch gekennzeichnet, dass** es einen vorherigen Schritt (E0) des Erstellens mindestens des ersten Kennfelds und des zweiten Kennfelds umfasst, wobei der vorherige Schritt (E0) die folgenden Teilschritte umfasst:

- Messungen (E01) des Drehmoments Tq der elektrischen Maschine (ME), die für verschiedene Dreiergruppen (Id, Iq, $T_i$) ausgeführt werden, die verschiedenen Arbeitspunkten der elektrischen Maschine (ME) entsprechen, wobei Id die direkte Komponente der Statorströme und $T_i$ die Temperatur des Rotors ist,
- Berechnen (E02), für jede der Dreiergruppen, einer Flusskomponente $\phi 1$, die unabhängig von der Temperatur des Rotors ist und durch $\phi1 = ( Ld - Lq ) * Id$ definiert wird, worin Ld die direkte Komponente der Statorinduktivität ist und Lq die Quadraturkomponente der Statorinduktivität ist, unter Verwendung des Ausdrucks

[Math 2]

$$\frac{Tq}{\frac{3p}{2} * I_Q} - \varphi_f(T_i)$$

wobei $\phi f(T_i)$ der Rotorflusswert ist, der der Temperatur $T_i$ des Rotors entspricht,
- Aufbauen (E03) des ersten Kennfelds, indem, für verschiedene Werte Id von direkten Komponenten von Statorströmen und Iq von Quadraturkomponenten von Statorströmen einer der Dreiergruppen, die zuvor berechnete Flusskomponente $\phi1$ und der Rotorflusswert bei der ersten Temperatur $(T_1)$ addiert werden,
- Aufbauen (E04) des zweiten Kennfelds, indem, für verschiedene Werte Id von direkten Komponenten von Statorströmen und Iq von Quadraturkomponenten von Statorströmen einer der Dreiergruppen, die zuvor berechnete Flusskomponente $\phi1$ und der Rotorflusswert bei der ersten Temperatur $(T_2)$ addiert werden.

3. Verfahren zur Schätzung des Drehmoments einer synchronen elektrischen Maschine (ME) nach Anspruch 1 oder 2, **dadurch gekennzeichnet, dass** die erste Temperatur $(T_1)$ und die zweite Temperatur $(T_2)$ Grenztemperaturen der elektrischen Maschine entsprechen.

4. Drehmomentschätzer einer synchronen elektrischen Maschine mit Permanentmagneten, der das Verfahren zur Schätzung des Drehmoments einer elektrischen Maschine nach einem der Ansprüche 1 bis 3 umsetzt.

**Claims**

1. Method for estimating the torque (Tq) of a synchronous electric machine (ME) comprising:

- a step of receiving (E1) measurements of the stator currents $(i_1, i_2, i_3)$ energizing said machine (ME) and a measured value $(T_{rot})$ of the temperature of said electric machine (ME),
- a step of determining (E2) a direct component (Id) of said stator currents, a quadrature component (Iq) of said stator currents energizing said machine (ME), and a rotor flux value $\phi f(T_{rot})$ corresponding to said measured temperature value $(T_{rot})$, the measured temperature value $(T_{rot})$ being comprised between a first predefined temperature $(T_1)$ and a second predefined temperature $(T_2)$,
- a step of obtaining (E3) a first equivalent overall flux value (phiD($\phi f(T_1)$)) corresponding to a rotor flux value at said first temperature $(T_1)$ of said electric machine (ME), from a first map giving said first equivalent overall flux value (phiD($\phi f(T_1)$)) as a function of said direct component (Id) of said stator currents and of said quadrature component (Iq) of said stator currents,
- a step of obtaining (E4) a second equivalent overall flux value (phiD($\phi f(T_2)$)) corresponding to a rotor flux value at said second temperature $(T_2)$ of said electric machine (ME), from a second map giving said second equivalent overall flux value (phiD($\phi f(T_2)$)) as a function of said direct component (Id) of said stator currents and of said quadrature component (Iq) of said stator currents,
- an interpolating step (E5) using said first equivalent overall flux value (phiD($\phi f(T_1)$)) and said second equivalent overall flux value (phiD($\phi f(T_2)$)), and delivering an estimate of the equivalent overall flux (phiD($\phi f(T_{rot})$)) corresponding to said rotor flux value at said measured temperature value $(T_{rot})$,
- a step of estimating (E6) the torque (Tq) of said machine (ME) using the following formula:

[Math. 1]

$$Tq = \frac{3p}{2} * phiD\left(\varphi_f(T_{rot})\right) * Iq$$

where:

- Tq is the torque of said electric machine (ME),
- p is the number of pole pairs of said electric machine (ME),
- Iq is said quadrature component of said stator currents,

- ($\phi$f(T$_{rot}$)) is said rotor flux value at said measured temperature value T$_{rot}$ of said electric machine,
- and phiD($\phi$f(T$_{rot}$)) is said estimate of the equivalent overall flux resulting from said interpolating step (E5).

2. Method for estimating the torque (Tq) of a synchronous electric machine (ME) according to Claim 1, **characterized in that** it comprises a preliminary step (E0) of establishing at least said first map and said second map, said preliminary step (E0) comprising the following sub-steps:

- taking measurements (E01) of the torque Tq of the electric machine (ME), these measurements being taken for various triplets (Id, Iq, T$_i$) corresponding to various operating points of said electric machine (ME), Id being said direct component of said stator currents and T$_i$ being the temperature of the rotor,
- computing (E02), for each of said triplets, a flux component $\phi$1 independent of the temperature of the rotor and defined by $\phi$1 = (Ld - Lq)*Id, where Ld is the direct component of the stator inductance and Lq is the quadrature component of the stator inductance, using the expression

[Math. 2]

$$\frac{Tq}{\frac{3p}{2} * I_q} - \varphi_f(T_i)$$

$\phi$f(T$_i$) being the rotor flux value corresponding to the temperature T$_i$ of the rotor,
- constructing (E03) said first map by adding, for various values Id of the direct components of the stator currents and Iq of the quadrature components of the stator currents of one of said triplets, said previously computed flux component $\phi$1, and the rotor flux value at said first temperature (T$_1$),
- constructing (E04) said second map by adding, for various values Id of the direct components of the stator currents and Iq of the quadrature components of the stator currents of one of said triplets, said previously computed flux component $\phi$1, and the rotor flux value at said first temperature (T$_2$).

3. Method for estimating the torque of a synchronous electric machine (ME) according to Claim 1 or 2, **characterized in that** said first temperature (T$_1$) and said second temperature (T$_2$) correspond to limit temperatures of said electric machine.

4. Torque estimator for a permanent-magnet synchronous electric machine, implementing the method for estimating the torque of an electric machine according to any one of Claims 1 to 3.

Fig.1

EP 3 928 426 B1

Fig.2

Fig.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3054391
- US 2012212169 A
- US 2011144843 A
- GB 2390766 A
- DE 102015207185